Europäisches Patentamt

European Patent Office

Office européen des brevets

(11) Numéro de publication: **0 269 489 B1**

(12) **FASCICULE DE BREVET EUROPEEN**

(45) Date de publication de fascicule du brevet: **22.04.92**  (51) Int. Cl.⁵: **G11B 5/31**

(21) Numéro de dépôt: **87402434.2**

(22) Date de dépôt: **28.10.87**

(54) **Procédé de réalisation d'une tête magnétique permettant de simplifier la réalisation des connexions électriques.**

(30) Priorité: **31.10.86 FR 8615224**

(43) Date de publication de la demande:
**01.06.88 Bulletin 88/22**

(45) Mention de la délivrance du brevet:
**22.04.92 Bulletin 92/17**

(84) Etats contractants désignés:
**BE CH DE GB IT LI NL**

(56) Documents cités:
**EP-A- 0 152 327**
**US-A- 4 402 801**

**PATENT ABSTRACTS OF JAPAN, vol. 7, no. 150 (P-207)[1295], 30 juin 1983; & JP-A-58 60 420 (DENSHI KEISANKI KIHON GIJUTSU KEN-KIYUU KUMIAI) 09-04-1983**

**PATENT ABSTRACTS OF JAPAN, vol. 10, no. 22 (P-424)[2079], 28 janvier 1986; & JP-A-60 175 207 (FUJI SHASHIN FILM K.K.) 09-09-1985**

**PATENT ABSTRACTS OF JAPAN, vol. 9, no. 156 (P-368)[1879], 29 juin 1985; & JP-A-60 29 914 (NIPPON DENSHIN DENWA KOSHA) 15-02-1985**

**PATENT ABSTRACTS OF JAPAN, vol. 9, no. 304 (P-409)[2027], 30 novembre 1985; & JP-A-60 136 906 (HITACHI SEISAKUSHO K.K.) 20-07-1985**

(73) Titulaire: **COMMISSARIAT A L'ENERGIE ATO-MIOUE Etablissement de Caractère Scientifi-que Technique et Industriel**
**31/33, rue de la Fédération**
**F-75015 Paris(FR)**

(72) Inventeur: **Deroux-Dauphin, Patrice**
**34, rue de Mortillet**
**F-38000 Grenoble(FR)**

(74) Mandataire: **Mongrédien, André et al**
**c/o BREVATOME 25, rue de Ponthieu**
**F-75008 Paris(FR)**

Rank Xerox (UK) Business Services

## Description

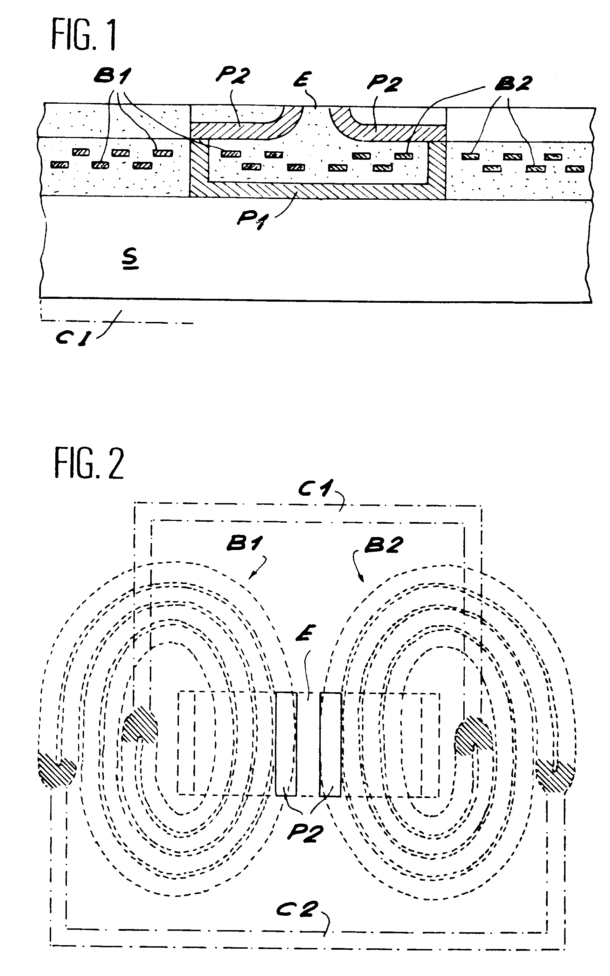

La présente invention a pour objet un procédé de réalisation d'une tête magnétique. La tête magnétique dont il est question dans l'invention est du type à couches minces et à structure horizontale. Une telle tête est représentée très schématiquement, en coupe, sur la figure 1. Sur un substrat S, on trouve une première pièce polaire P1, un enroulement formé de deux parties B1, B2, chacune constituée par exemple de deux spirales complémentaires situées dans des plans différents, une deuxième pièce polaire P2 comprenant deux parties séparées par un entrefer amagnétique E.

La piste magnétique à enregistrer ou à lire passe devant l'entrefer E. A l'arrière de la tête, on peut trouver un circuit intégré CI, qui sert à traiter les signaux délivrés par les enroulements ou transmis à ceux-ci.

Sur la figure 2, qui est une vue de dessus simplifiée, on voit mieux les deux enroulements B1, B2, en forme de double spirale s'étendant de part et d'autre de l'entrefer.

Une telle tête à structure horizontale est décrite par exemple dans la demande de brevet européen EP-A-0 152 326.

L'invention a pour objet un procédé de réalisation des diverses connexions électriques qu'on trouve dans une telle tête, à savoir des connexions entre les divers enroulements (que l'on appellera par la suite "interconnexions") et les connexions entre le plan où se situent ces enroulements et la face arrière du substrat où se trouve le circuit intégré (que l'on appellera "intraconnexions"). Les interconnexions consistent en un moyen permettant de relier entre eux les plots de contact intérieurs des spirales d'une part et les plots de contact extérieurs d'autre part. Ces interconnexions sont schématisées sur la figure 2 par les pistes C1 et C2.

L'invention propose un procédé simple selon la revendication 1. Les opérations ultérieures de formation du bobinage et de création de la seconde pièce polaire sont ensuite classiques et interviennent après obtention de ce sous-ensemble muni des inter- et intraconnexions.

De toute façon, les caractéristiques de l'invention apparaîtront mieux à la lecture de la description qui suit, d'exemples de réalisation donnés à titre explicatif et nullement limitatif. Cette description se réfère à des dessins sur lesquels :

- la figure 1, déjà décrite, représente une coupe schématique d'une tête magnétique à structure horizontale,
- la figure 2 montre la même tête en vue de dessus,
- la figure 3 montre une première étape du procédé de l'invention,
- la figure 4 montre une deuxième étape de ce procédé,
- la figure 5 montre une troisième étape de ce procédé,
- la figure 6 montre une quatrième étape de ce procédé,
- la figure 7 montre une cinquième étape de ce procédé,
- la figure 8 montre une sixième étape de ce procédé,
- la figure 9 montre une septième étape de ce procédé,
- la figure 10 montre, en vue de dessus, le sous-ensemble obtenu après la septième étape,
- la figure 11 montre une huitième étape,
- la figure 12 montre une neuvième étape,
- la figure 13 montre une dixième étape,
- la figure 14 montre, en coupe, la tête finalement obtenue.

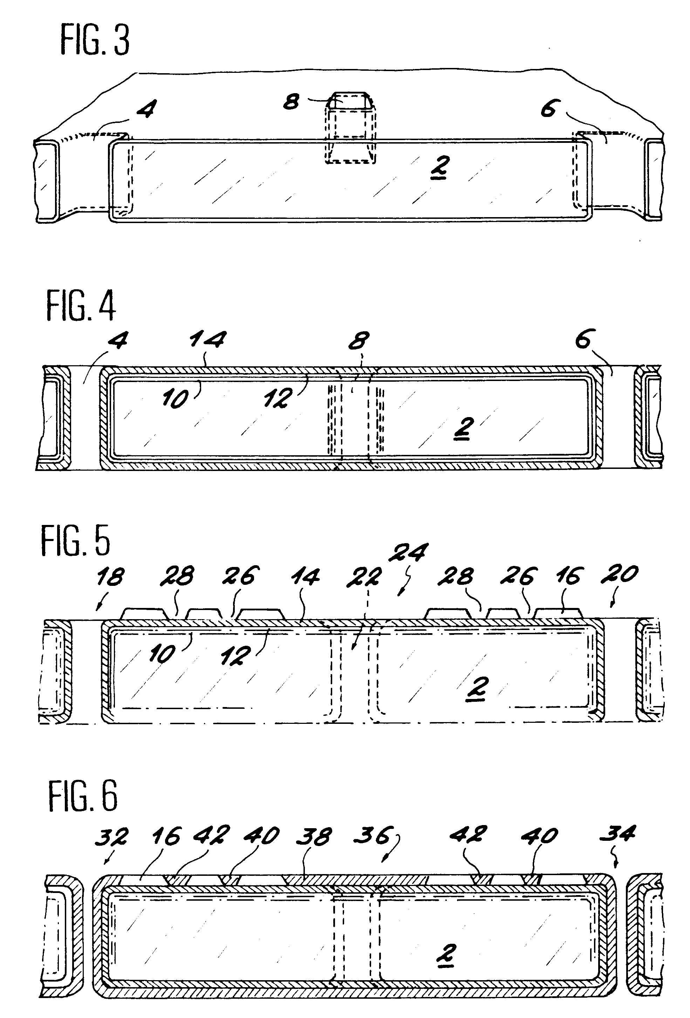

La figure 3 montre un substrat qui peut être isolant ou semi-conducteur 2, par exemple en silicium, dans lequel on perce des trous 4, 6, 8 à des emplacements où se situeront les futures intraconnexions entre les deux faces du substrat. Le trou 8 est situé en arrière et la coupe est supposée passer par l'axe des trous 4 et 6. On réalise ensuite une oxydation de ce substrat 2 pour créer une couche isolante 10 sur l'ensemble du substrat et dans les trous 4, 6, 8.

La figure 4 montre l'ensemble obtenu après dépôt d'une couche conductrice, par exemple par dépôt de silicium polycristallin 12 suivi d'un dépôt de tungstène 14 ; tout autre métal qui se dépose en phase vapeur ou de toute autre manière tel que le plaquage électrolytique peut être utilisé.

On dépose ensuite sur l'une des faces du substrat une couche isolante 16, qui est par exemple obtenue par CVD (Chemical Vapor Deposition) assisté par plasma. On grave cette couche isolante 16 pour définir, d'une part, au-dessus des trous 4, 6 et 8 des zones 18, 20 et 22 à l'emplacement de futurs plots de contact pour des intraconnexions d'une face à l'autre du substrat, et, d'autre part, un caisson 24 rectangulaire à l'emplacement d'une future première pièce polaire, et enfin deux gorges en forme de U, respectivement 26 et 28, l'une contournant le caisson par l'un de ses côtés, l'autre contournant le caisson par l'autre côté. Cette gravure est poursuivie jusqu'à mise à nu de la couche conductrice 12, 14 (figure 5).

Utilisant la double couche conductrice 12, 14 comme électrode, on effectue un dépôt électrolytique d'un métal magnétique conducteur, par exemple un alliage Fe-Ni. On forme ainsi, dans les zones 18, 20 et 22, des plots conducteurs creux 32, 34 et 36, une première pièce magnétique 38 et deux pistes d'interconnexion 40, 42. Ces éléments conducteurs sont visibles sur la figure 6. Leur épaisseur est de 1 à plusieurs microns.

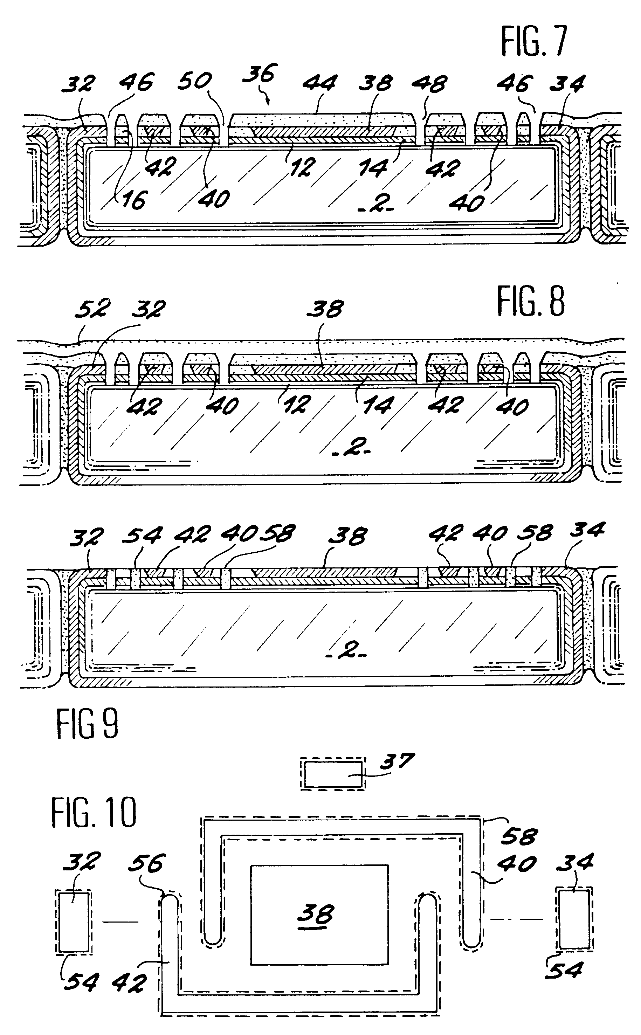

La figure 7 représente une étape supplémentaire après dépôt d'une couche isolante 44 sur la première face et dans les plots conducteurs, et gravure de l'ensemble formé par cette dernière couche isolante 44, la couche isolante 16 et la couche métallique 12, 14. On obtient ainsi des sillons 46 entourant les plots d'intraconnexion 32, 34, 36, un sillon 48 entourant la piste d'interconnexion 42 et un sillon 50 entourant l'autre piste d'interconnexion 40.

On dépose ensuite un isolant 52 (par exemple un polymère) sur la première face, y compris dans les sillons 46, 48, 50 (figure 7). Puis on grave cet isolant 52 jusqu'à faire apparaître la première pièce polaire 38, les pistes d'interconnexion 40, 42 et les plots d'intraconnexion 32, 34. Un anneau de garde isolant 54 subsiste autour des plots d'intraconnexion 32, 34 et des anneaux 56, 58 autour des deux pistes d'interconnexion 56, 58. On obtient ainsi un sous-ensemble qui est représenté sur la figure 9 en coupe et sur la figure 10 en vue de dessus. Ce sous-ensemble est plan.

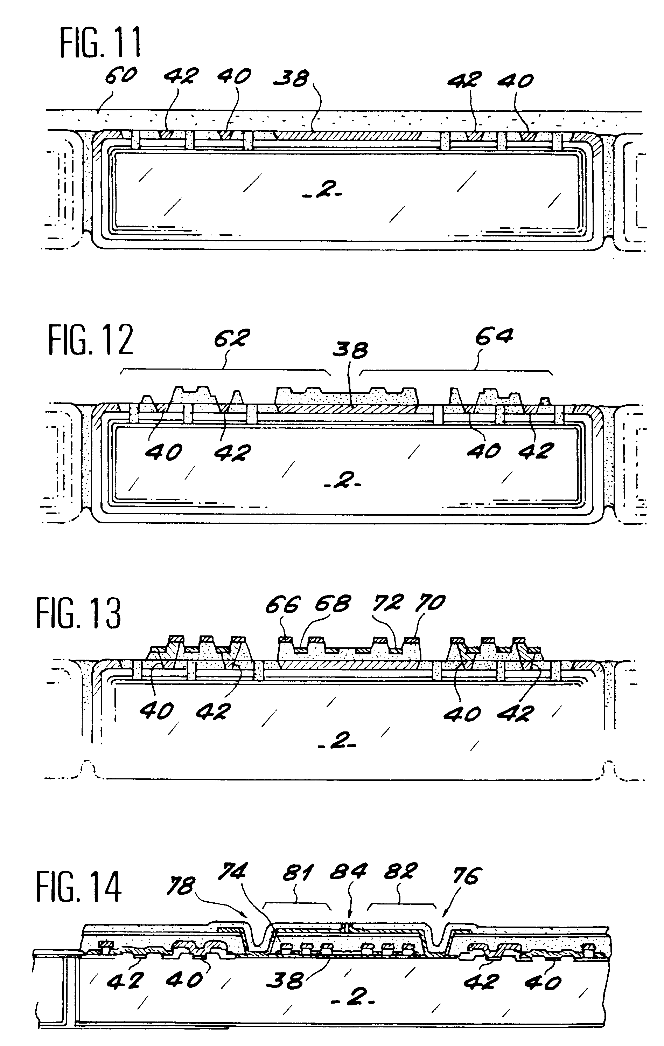

Il s'agit ensuite de compléter la tête par formation d'un bobinage et création de la deuxième pièce polaire. Tout procédé connu peut être utilisé à cette fin. Les figures 11 à 13 montrent quelques opérations possibles mais on peut en imaginer d'autres, sachant que la pièce polaire 38 n'est pas isolée par rapport au reste du substrat, et peut donc par exemple continuer à servir d'électrode pour la suite du procédé technologique.

Sur la figure 11, on a représenté le sous-ensemble obtenu grâce aux opérations précédemment décrites après dépôt d'une couche isolante 60. On grave dans cet isolant deux gorges symétriques 62, 64 en forme de spirales, de part et d'autre de la première pièce polaire (figure 12). On dépose un métal sur l'ensemble de l'isolant ainsi gravé, ce qui donne naissance à deux spirales conductrices complémentaires 66, 68, 70, 72 de chaque côté de la pièce magnétique 38, comme on le voit sur la figure 13. Ces spirales sont situées sur deux plans différents 66, 70 et 68, 72. Ces spirales viennent prendre contact respectivement avec les pistes 40, 42, ce qui assure leur interconnexion.

La figure 14 montre la tête complète obtenue après qu'une couche d'isolant 74 a été déposée, que deux puits 76, 78 ont été gravés pour dégager l'un des bords de la première pièce magnétique 38, et qu'une couche magnétique 80 qui vient au contact avec la première couche 38 a été déposée. Cette couche comprend deux parties 81, 82 séparées par un entrefer amagnétique 84.

De telles opérations sont décrites dans le brevet européen cité plus haut.

Une variante au procédé décrit consiste, dans un premier temps, à partir de la couche conductrice 12 et 14, à remplir uniquement les trous 18, 20 et 22, leur emplacement étant défini par un masque tel que celui décrit précédemment. Une gravure chimique permet de planariser la surface. Dans un deuxième temps, on peut, par exemple, renforcer la couche conductrice par une autre couche métallique déposée par technique de pulvérisation cathodique et continuer ainsi la suite du procédé comme décrit précédemment. Le remplissage total des trous par un matériau magnétique et conducteur peut avoir deux buts: le premier est d'avoir une arrivée de courant d'une façon homogène sur toute la plaquette, le second est de se servir éventuellement de cette interconnexion comme canal magnétique.

## Revendications

1. Procédé de réalisation d'une tête magnétique de lecture et d'écriture en couches minces et à structure horizontale comprenant, sur un substrat (S), une première pièce polaire (P1), un enroulement conducteur en deux parties (B1, B2), une seconde pièce polaire (P2) comprenant deux parties séparées par un entrefer amagnétique (E) et des interconnexions électriques entre les deux parties de l'enroulement, ce procédé étant caractérisé par les opérations suivantes :
   - on part d'un substrat (2),
   - on dépose une couche conductrice (12, 14) sur le substrat puis une couche isolante (16),
   - on grave la couche isolante (16) pour définir un caisson (24) à l'emplacement d'une future première pièce polaire, et deux gorges en forme de U (26, 28), l'une contournant le caisson par l'un de ses côtés, l'autre contournant le caisson par l'autre côté, cette gravure mettant à nu la couche conductrice (12, 14),
   - utilisant la couche conductrice (12, 14) comme électrode, on effectue un dépôt électrolytique d'un matériau magnétique et électriquement conducteur formant ainsi la première pièce polaire (38) dans le caisson et deux pistes d'interconnexion (40, 42) dans les gorges,
   - on dépose une couche isolante (44) sur l'ensemble obtenu,
   - on grave l'ensemble formé par cette dernière couche isolante (44), la couche isolante (16) et la couche métallique (12,14) pour former un sillon (48) entourant l'une des pistes d'interconnexion (40) et un sillon (50) entourant l'autre piste d'interconnexion (42),

- on dépose un isolant (52) y compris dans les sillons (48, 50),
- on grave cet isolant (52) jusqu'à faire apparaître la première pièce polaire (38) et les pistes d'interconnexion (40, 42), un anneau de garde isolant subsistant autour des deux pistes d'interconnexion (56, 58),
- on forme sur ce sous-ensemble, par tout procédé connu, un enroulement relié aux pistes d'interconnexion (40, 42) et l'on crée une deuxième pièce polaire en contact avec la première et présentant un entrefer.

2. Procédé selon la revendication 1, caractérisé par le fait qu'on réalise en outre des intraconnexions entre la face avant du substrat et la face arrière, en perçant des ouvertures (4, 6, 8) à travers le substrat et en comblant au moins en partie ces ouvertures par ledit matériau à la fois magnétique et électriquement conducteur.

3. Procédé selon la revendication 2, caractérisé par le fait que le matériau magnétique et électriquement conducteur utilisé pour former à la fois les interconnexions, les intraconnexions et la première pièce polaire est un alliage fer-nickel.

4. Procédé selon la revendication 2, caractérisé par le fait qu'il comprend les opérations suivantes :
   - dans le substrat (2), on perce des trous (4, 6, 8) à des emplacements où se situeront de futures intraconnexions entre les deux faces du substrat,
   - on réalise une oxydation de ce substrat (2) pour créer une autre couche isolante (10) sur l'ensemble du substrat et dans les trous (4, 6, 8),
   - on dépose la couche conductrice (12, 14) sur l'ensemble du substrat y compris les trous,
   - on dépose sur l'une des faces du substrat la couche isolante (16),
   - on grave cette couche isolante (16) pour définir, au-dessus des trous (4, 6, 8) des zones (18, 20, 22) à l'emplacement de futurs plots de contact pour des intraconnexions d'une face à l'autre du substrat, le caisson rectangulaire (24) à l'emplacement d'une future première pièce polaire, et les deux gorges en forme de U (26, 28), l'une contournant le caisson par l'un de ses côtés, l'autre contournant le caisson par l'autre côté, cette gravure mettant à nu la couche conductrice (12, 14),
   - utilisant la couche conductrice (12, 14) comme électrode, on effectue le dépôt électrolytique d'un métal magnétique et électriquement conducteur formant ainsi dans les zones (18, 20, 22) des plots conducteurs creux (32, 34, 36) au-dessus et dans les trous (4, 6, 8), la première pièce magnétique (38) et les deux pistes d'interconnexion (40, 42),
   - on dépose la couche isolante (44) sur la première face et dans les plots conducteurs,
   - on grave l'ensemble formé par cette dernière couche isolante (44), la couche isolante (16) et la couche métallique (12, 14) pour former des sillons (46) entourant les plots d'intraconnexion (32, 34, 36), le sillon (48) entourant l'une des pistes d'interconnexion (42) et le sillon (50) entourant l'autre piste d'interconnexion (44),
   - on dépose l'isolant (52) sur la première face y compris dans les sillons (46, 48, 50),
   - on grave cet isolant (52) jusqu'à faire apparaître la première pièce polaire (38), les pistes d'interconnexion (40, 42) et les plots d'intraconnexion (32, 34),
   - on forme sur ce sous-ensemble, par tout procédé connu, un enroutement et l'on crée une deuxième pièce polaire en contact avec la première et présentant un entrefer.

5. Procédé selon la revendication 4, caractérisé par le fait que les opérations de formation du bobinage et de la seconde pièce polaire comprennent les opérations suivantes :
   - on dépose sur le sous-ensemble une couche isolante (60),
   - on grave dans cet isolant deux gorges (62, 64) en forme de spirales symétriques de part et d'autre de la première pièce polaire,
   - on dépose un métal sur l'ensemble de l'isolant ainsi gravé, ce qui donne naissance à deux spirales conductrices complémentaires (66, 68, 70, 72) de chaque côté de la pièce magnétique, ces spirales étant situées sur deux plans différents (66, 70 et 68, 72), ces spirales venant prendre contact respectivement avec les pistes (40, 42), ce qui assure leur interconnexion,
   - on dépose sur l'ensemble une couche d'isolant (74) que l'on grave pour dégager deux puits (76, 78) dégageant chacun l'un des bords de la première pièce polaire magnétique (38),

- on dépose une couche magnétique (80) qui vient au contact avec la première couche (38) et qui comprend deux parties (81, 82) séparées par un entrefer amagnétique (84).

**Claims**

1. Process for producing a magnetic reading and writing head in thin film form and having a horizontal structure comprising, on a substrate (S), a first pole piece (P1), a conductive winding in two parts (B1, B2), a second pole piece (P2) incorporating two portions separated by an amagnetic air gap (E) and electrical interconnections between said two portions of the winding, said process being characterized by the following operations:
   - starting with a substrate (2),
   - a conductive layer (12, 14) is deposited on the substrate, followed by an insulating layer (16),
   - the insulating layer (16) is etched to define a recess (24) at the location of a future first pole piece, and two U-shaped slots (26, 28), one passing round the recess by one of its sides and the other passing round the recess by the other side, said etching exposing the conductive layer (12, 14),
   - using the conductive layer (12, 14) as the electrode, an electrolytic deposition takes place of a magnetic and electrically conductive material, thus forming the first pole piece (38) in the recess and two interconnection tracks (40, 42) in the slots,
   - an insulating layer (44) is deposited on the assembly obtained,
   - the assembly formed by the latter insulating layer (44), the insulating layer (16) and the metal layer (12, 14) is etched in order to form a groove (48) surrounding one of the interconnection tracks (40) and a groove (50) surrounding the other interconnection track (42),
   - an insulant (52) is deposited, also in the grooves (48, 50),
   - said insulant (52) is etched until the first pole piece (38) and the interconnection tracks (40, 42) appear, an insulating guard ring remaining around the intraconnection pieces (54) and around the two interconnection tracks (56, 58),
   - on said subassembly is formed by any known process, a winding connected to the interconnection tracks (40, 42) and a second pole piece is formed in contact with the first and which has an air gap.

2. Process according to claim 1, characterized in that intraconnections are also formed between the front face of the substrate and the rear face by making openings (4, 6, 8) through the substrate and by at least partly filling these openings with said magnetic and electrically conductive material.

3. Process according to claim 2, characterized in that the magnetic and electrically conductive material used for forming the interconnections, the intraconnections and the first pole piece is an iron - nickel alloy.

4. Process according to claim 2, characterized in that it comprises the following operations:
   - in the substrate (2) holes (4, 6, 8) are formed at the locations at which will subsequently be located the intraconnections between the two faces of the substrate,
   - the substrate (2) is oxidized in order to produce another insulating layer (10) over the entire substrate and in the holes (4, 6, 8),
   - the conductive layer (12, 14) is deposited on the complete substrate, including the holes,
   - on one of the substrate faces is deposited the insulating layer (16),
   - said insulating layer (16) is used for defining, above the holes (4, 6, 8), zones (18, 20, 22) at the location of the future contact pieces for the intraconnections from one face to the other of the substrate, the rectangular recess (24) at the location of a future first pole piece and two U-shaped slots (26, 28) one passing round the recess on one of its sides and the other passing round the recess by the other side, said etching exposing the conductive layer (12, 14),
   - using the conductive layer (12, 14) as the electrode, electrolytic deposition takes place of a magnetic and electrically conductive metal, thus forming in the zones (18, 20, 22) hollow conductive pieces (32, 34, 36) above and in the holes (4, 6, 8), the first magnetic piece (38) and the two interconnection tracks (40, 42),
   - the insulating layer (44) is deposited on the first face and in the conductive tracks,
   - etching takes place of the assembly formed by said latter insulating layer (44), the insulating layer (16) and the metal layer (12, 14) for forming grooves (46) surrounding the intraconnection pieces (32, 34, 36), the groove (48) surrounding one of the interconnection tracks (42) and the groove (50) surrounding the other interconnection track (44),

- the insulant (52) is deposited on the first face, including in the grooves (46, 48, 50),
- said insulant (52) is etched until the first pole piece (38), the interconnection tracks (40, 42) and the intraconnection pieces (32, 34) appear,
- on said subassembly is formed by any known process a winding and a second pole piece is produced in contact with the first and which has an air gap.

5. Process according to claim 4, characterized in that the operations for forming the coil and the second pole piece involves:

- depositing an insulating layer (60) on the subassembly,
- etching in said insulant two slots (62, 64) in the form of symmetrical spirals on either side of the first pole piece, a metal is deposited on the thus etched insulant, which gives rise to two complementary conductive spirals (66, 68, 70, 72) on each side of the magnetic piece, said spirals being located on two different planes (66, 70 and 68, 72), said spirals contacting respectively the tracks (40, 42), which ensures their interconnection,
- on the assembly is deposited an insulating layer (74), which is etched in order to form two wells (76, 78), each freeing one of the edges of the first magnetic pole piece (38),
- a magnetic layer (80) is deposited, which comes into contact with the first layer (38) and which comprises two portions (81, 82) separated by an amagnetic air gap (84).

**Patentansprüche**

1. Verfahren zum Herstellen eines magnetischen Lese- und Schreibkopfes aus dünnen Schichten und mit horizontaler Struktur, enthaltend auf einem Substrat (S) ein erstes Polstück (P1), eine Leiterwicklung in zwei Teilen (B1,B2), ein zweites Polstück (P2) aus zwei Teilen, die durch einen nicht-magnetischen Spalt (E) voneinander getrennt sind, und elektrische Verbindungen zwischen den zwei Teilen der Wicklung, gekennzeichnet durch die folgenden Schritte:

man geht vom einem Substrat (2) aus,

man scheidet auf dem Substrat eine Leiterschicht (12,14) und dann eine Isolierschicht (16) ab,

man ätzt die Isolierschicht (16), um einen Kasten (24) zur späteren Aufnahme eines ersten Polstücks und zwei U-förmige Kehlen (26,28) auszubilden, von denen die eine den Kasten mit einer ihrer Seiten begrenzt und die andere den Kasten mit der anderen Seite begrenzt, wobei diese Ätzung die Leiterschicht (12,14) freilegt,

unter Verwendung der Leiterschicht (12,14) als Elektrode führt man eine elektrolytische Abscheidung eines magnetischen und elektrisch leitfähigen Materials aus, das somit das erste Polstück (38) in dem Kasten und zwei Verbindungsleiter (40,42) in den Kehlen bildet,

man scheidet eine Isolierschicht (44) auf die erhaltene Anordnung ab,

man ätzt die durch diese letzte Isolierschicht (44), die Isolierschicht (16) und die Metallschicht (12,14) gebildete Anordnung, um eine Rille (48) auszubilden, die einen der Verbindungsleiter (40) umgibt, und eine Rille (50) auszubilden, die den anderen Verbindungsleiter (42) umgibt,

man scheidet ein Isoliermittel (52) auch in den Rillen (48,50) ab,

man ätzt dieses Isoliermittel (52), bis das erste Polstück (38) und die Verbindungsleiter (40,42) erscheinen, wobei ein isolierender Schutzring um die Anschlußflecken (54) um die zwei Verbindungsleiter (56,58) zurückbleibt,

man bildet auf dieser Untergruppe in an sich bekannter Weise eine Wicklung aus, die mit den Verbindungsleitern (40,42) verbunden ist, und man erzeugt ein zweites Polstück, das mit dem ersten in Berührung ist und einen Spalt aufweist.

2. Verfahren nach Anspruch 1, dadurch gekennzeichnet, daß man weiterhin Durchverbindungen zwischen der Vorderseite des Substrats und der Rückseite schafft, indem man Öffnungen (4,6,8) durch das Substrat bohrt und wenigstens teilweise diese Öffnungen mit dem zugleich magnetischen und elektrisch leitfähigen Material ausfüllt.

3. Verfahren nach Anspruch 2, dadurch gekennzeichnet, daß das magnetische und elektrisch leitfähige Material, das zum Ausbilden der Verbindungen, der Durchverbindungen und des ersten Polstücks verwendet wird, eine Eisen-Nickel-Legierung ist.

**4.** Verfahren nach Anspruch 2, dadurch gekennzeichnet, daß es die folgenden Schritte umfaßt: man bohrt in das Substrat (2) Löcher (4,6,8) an Stellen, wo sich später die Durchverbindungen zwischen den zwei Seiten des Substrats befinden,

man führt eine Oxidation des Substrats (2) aus, um eine weitere Isolierschicht (10) auf dem Substrat und in den Löchern (4,6,8) zu erzeugen,

man scheidet die Leiterschicht (12,14) auf dem Substrat und den Löchern ab,

man scheidet auf eine der Seiten des Substrats die Isolierschicht (16),

man ätzt diese Isolierschicht (16), um über den Löchern (4,6,8) Zonen (18,20,22) zur späteren Anbringung von Kontaktflecken für die Durchverbindung zwischen der einen Seite zur anderen des Substrats, den rechteckigen Kasten (24) zur späteren Aufnahme des ersten Polstücks und die zwei U-förmigen Kehlen (26,28) auszubilden, von denen die eine den Kasten an einer seiner Seiten und die andere den Kasten an der anderen Seite umgibt, wobei diese Ätzung die Leiterschicht (12,14) freilegt,

unter Verwendung der Leiterschicht (12,14) als Elektrode führt man eine elektrolytische Scheidung eines magnetischen und elektrisch leitfähigen Metalls aus, das so in den Zonen (18,20,22) hohe Leiterflecken (32,34,36) über und in den Löchern (4,6,8), das erste Magnetstück (38) und die zwei Verbindungsleiter (40,42) ausbildet,

man scheidet die Isolierschicht (44) auf der ersten Seite und in den Leiterflecken ab,

man ätzt die Anordnung, die aus dieser letzten Isolierschicht (44), der Isolierschicht (16) und der Metallschicht (12,14) besteht, um Rillen (46) auszubilden, die die Durchverbindungsflecken (32,34,36) umgeben, wobei die Rille (48) eine der Verbindungsleiter (42) und die Rille (50) den anderen Verbindungsleiter (44) umgibt,

man scheidet das Isoliermittel (52) auf die erste Seite und in den Rillen (46,48,50) ab,

man ätzt dieses Isoliermittel (52), bis das erste Polstück (38), die Verbindungsleiter (40,42) und die Durchverbindungsflecken (32,34) erscheinen,

man bildet auf dieser Untergruppe in an sich bekannter Weise eine Wicklung aus und man erzeugt ein zweites Polstück, das mit dem ersten in Berührung ist und einen Spalt aufweist.

**5.** Verfahren nach Anspruch 4, dadurch gekennzeichnet, daß die Schritte zur Ausbildung der Wicklung und des zweiten Polstücks die folgenden Vorgänge umfassen:

man scheidet auf der Untergruppe eine Isolierschicht (60) ab,

man ätzt in diese Isolierschicht zwei Kehlen (62,64) in Form symmetrischer Spiralen zu beiden Seiten des ersten Polstücks,

man scheidet ein Metall auf der so gebildeten isolierenden Anordnung ab, was zwei komplementäre Leiterspiralen (66,68,70,72) zu beiden Seiten des Magnetstücks entstehen läßt, wobei diese Spiralen über zwei unterschiedlichen Ebenen (66,70 und 68,72) gelegen sind und diese Spiralen jeweils in Kontakt mit den Leiterbahnen (40,42) gelangen, was ihre Verbindung sicherstellt,

man scheidet auf der Anordnung eine Isolierschicht (74) ab, die man ätzt, um zwei Gruben (76,78) auzubilden, die jeweils einen der Ränder des ersten magnetischen Polstücks (38) freilegen,

man scheidet eine Magnetschicht (80) ab, die mit der ersten Schicht (38) in Berührung gelangt und die zwei durch einen nicht-magnetischen Spalt (84) voneinander getrennte Teile (81,82) aufweist.

FIG. 1

FIG. 2

## FIG. 3

4    8    6

2

## FIG. 4

4    14    8    6

10    12    2

## FIG. 5

18    28    26    14    22    24    28    26    16    20

10    12    2

## FIG. 6

32    16    42    40    38    36    42    40    34

2

FIG. 7

FIG. 8

FIG 9

FIG. 10

**FIG. 11**

**FIG. 12**

**FIG. 13**

**FIG. 14**